# EUROPÄISCHE PATENTSCHRIFT

(11) **EP 1 947 141 B1**
(45) Veröffentlichungstag und Bekanntmachung des Hinweises auf die Patenterteilung: **05.10.2011**
(21) Anmeldenummer: 08100669.4
(22) Anmeldetag: 18.01.2008
(51) Int. Cl.: C08K 13/06, C08L 75/04, C08K 3/14, C08K 3/22, C08K 3/36, C08K 5/09, C08K 9/06, C08K 13/02

(54) **Stabilisierte Suspensionen von anorganischen Partikeln**
Stabilised suspensions of anorganic particles
Suspensions stabilisées de particules inorganiques

(30) Priorität: 18.01.2007 DE 102007003622; 26.03.2007 DE 102007014872
(43) Veröffentlichungstag der Anmeldung: 23.07.2008
(73) Patentinhaber: Fraunhofer-Gesellschaft zur Förderung der angewandten Forschung e.V., 80686 München (DE)
(72) Erfinder: Brinkmann, Andreas, 45219, Essen (DE); Stenzel, Volkmar, 27321, Thedinghausen (DE); Kaune, Martin, 28357, Bremen (DE); Wilke, Yvonne, 28865, Lilienthal (DE)
(74) Vertreter: Stilkenböhmer, Uwe Michael

(56) Entgegenhaltungen:
- EP-B- 1 366 112
- WO-A-2006/083431
- DE-A1- 10 008 473

## Beschreibung

Die vorliegende Erfindung betrifft Suspensionen von anorganischen Partikeln wie etwa SiO₂-Partikeln bzw. anorganischen Nano-Partikeln in einer äußeren Phase, die polymerisierbare Monomere, Oligomere und/oder Prepolymere umfasst. Mit (I) und (II) werden im Folgenden zwei alternative Aspekte derselben Erfindung bezeichnet, nämlich:
(I) die anorganischen Partikel sind SiO₂-Partikel, wobei die SiO₂-Partikel mittels eines Sol-Gel-Verfahrens herstellbar sind und eine mittlere Teilchengröße von maximal 100 nm besitzen, bzw.
(II) die anorganischen Partikel sind anorganische Nano-Partikel, wobei die anorganischen Nano-Partikel eine mittlere Teilchengröße von maximal 200 nm besitzen, wobei die Suspension frei ist von SiO₂-Partikeln, die mittels eines Sol-Gel-Verfahrens herstellbar sind.

Die Erfindung betrifft zudem Verfahren zur Herstellung einer erfindungsgemäßen Suspension sowie teil- oder vollausgehärtete Dispersionen, die aus einer erfindungsgemäßen Dispersion herstellbar sind.

SiO₂-Partikel bzw. anorganische Nano-Partikel einer mittleren Teilchengröße von beispielweise maximal 100 nm bzw. 200 nm sind häufiger Bestandteil von polymerisierbaren Formulierungen (insbesondere Lacksystemen) und bewirken in diesen als nanoskaliger Füllstoff positive Eigenschaften wie:
- verringerte Viskosität bzw. verbessertes Viskositätsverhalten (inklusive Einstellung von Thixotropie und Fließgrenze) der Formulierung im Vergleich mit konventionellen verstärkenden Füllstoffen;
- Erhöhung der Bruchfestigkeit, der Schlagzähigkeit und des Modulus;
- verbesserte Kratz- und Abriebfestigkeit;
- verringerter Härtungsschrumpf und verringerte thermische Expansion;
- einen hohen Gesamtfüllstoffanteil, insbesondere bei Kombination mit konventionellen Füllstoffen eines größeren Teilchendurchmessers.

Besonders bevorzugt ist der Einsatz oberflächenmodifizierter sphärischer SiO₂-Partikel mit einem mittleren Teilchendurchmesser von maximal 100 nm oder von anorganischen Nano-Partikeln umfassend oder bestehend aus SiO₂, TiO₂, Al₂O₃, ZrO₂, SiC, anderen oxidischen und/oder keramischen Materialien, Diamant oder aber Kombinationen der genannten Materialien, die einen mittleren Teilchendurchmesser von maximal 200 nm aufweisen.

DE 196 17 931 C2 offenbart bestimmte gefüllte und polymerisierbare Dentalmaterialien umfassend
(a) eine äußere Phase umfassend polymerisierbare Verbindungen sowie
(b) eine dispergierte Phase bestehend aus oberflächenmodifizierten amorphen SiO₂-Partikeln, wobei die amorphen SiO₂-Partikel mittels eines Sol-Gel-Verfahrens herstellbar sind und eine mittlere Größe von 10 bis 100 nm besitzen.

EP 1 366 112 B1 offenbart Dispersionen, die in der dispersen Phase amorphes Siliziumdioxid enthalten, welches aus einer wässrigen Silikatlösung durch Polykondensation hergestellt wird. Gemäß EP 1 366 112 B1 liegt die mittels Neutronenkleinwinkelstreuung (SANS) gemessene mittlere Teilchengröße des Siliziumdioxids zwischen 3 und 50 nm bei einer maximalen Halbwertsbreite der Verteilungskurve von 1,5 dₘₐₓ. Derartige Siliziumdioxid-Teilchengrößen und die offenbarten Herstellverfahren für amorphes SiO₂ sind auch im Rahmen von Aspekt (I) der vorliegenden Erfindung (siehe dazu auch unten) bevorzugt.

US 4,455,205, US 4,478,876 und US 4,348,462 offenbaren Dispersionen von kolloidalem Siliziumdioxid in polymerisierbaren Bindemitteln.

Für eine Vielzahl von Anwendungen werden Suspensionen von (I) (nanoskaligen) SiO₂-Partikeln bzw. (II) anorganischen Nano-Partikeln in einer polymerisierbaren äußeren Phase gesucht, welche eine hohe Stabilität der (I) SiO₂-Partikel bzw. (II) Nano-Partikel gegenüber Zusammenballung (insbesondere Flockulation, Aggregation, Agglomeration) besitzen. Derartige Suspensionen sollten vorzugsweise auch bei Zugabe üblicher Lösungsmittel, Bindemittel, Additive oder Reaktionspartner (die beispielsweise die Polymerisation des Bindemittels auslösen sollen) stabil im genannten Sinne bleiben, d.h. die suspendierten SiO₂-Partikel bzw. Nano-Partikel sollten sich nicht aufgrund der besagten Zugabe zusammenballen (d. h. zu größeren Partikeln vereinigen). Nachteiligerweise wird nämlich in der Praxis häufig beobachtet, dass es während des Formulierungs- und Verarbeitungsprozesses zu einer Störung der (I) Primärteilchenstabilität bzw. (II) Stabilität der Primärteilchen (bzw. Sekundärteilchen) und damit zu einer erhöhten Neigung zum Zusammenballen (insbesondere zur Flockulation) kommt. Störungen der genannten Art treten beispielsweise regelmäßig beim Mischen einer (I) Primärsuspension bzw. (II) entsprechenden Suspension mit Bindemittel oder Lösungsmittel auf. In diesem Zusammenhang wird dann vom sogenannten Bindemittel- oder Lösungsmittelschock gesprochen. In Lackformulierungen kommt es beispielsweise häufig zu einer Flockulation der ursprünglich eingesetzten (I) SiO₂-Nanopartikel bzw. (II) Nano-Partikel, was sich durch Schlieren sowohl im Lack als auch in der ausgehärteten Beschichtung zeigt. Der dadurch entstehende höhere Streuanteil des Lichtes führt zur Glanz- und Farbton-Beeinträchtigung (Trübung, Aufhellung) und ist daher in vielen technischen Bereichen (zum Beispiel im Automobilbereich) nicht akzeptabel.

In der Praxis hat es sich insbesondere gezeigt, dass es bereits nach Zusatz geringer Mengen von Hexamethylendiisocyanat (HDI), beispielsweise in Form eines Hexamethylendiisocyanat-Biurets (HDI-Biurets), zu Suspensionen von (I) SiO₂-Nanopartikeln bzw. (II) anorganischen Nano-Partikeln zu einem Zusammenballen der (I) SiO₂-Nanopartikeln bzw (II) Partikel zu größeren Partikeln kommt, was im Fall (I) insbesondere an der Umsetzung des Isocyanats mit freien OH-Gruppen auf der Oberfläche der SiO₂-Partikel liegen dürfte.

Es war daher die primäre Aufgabe der vorliegende Erfindung, eine Suspension von anorganischen Partikeln (insbesondere (I) nanoskaligen SiO₂-Partikeln bzw. (II) anorganischen nanoskaligen Partikeln) in einer polymerisierbaren äußeren Phase anzugeben, wobei die Partikel (insbesondere (I) SiO₂-Partikel bzw. (II) Nano-Partikel) in der Suspension eine nur geringe Neigung zum Zusammenballen (Agglomeration, Aggregation, Flockulation) besitzen sollten, und zwar auch dann, wenn die Suspension mit üblichen weiteren Bindemittel- oder Lösungsmittelkomponenten, üblichen sonstigen Additiven oder üblichen Reaktionspartner versetzt wird, Insbesondere sollte der Zusatz von Isocyanaten wie HDI zu den anzugebenden Suspensionen nicht oder nur vergleichsweise langsam zur Zusammenballung der Partikel (insbesondere (I) SiO₂-Partikel bzw. (II) Nano-Partikel) führen.

Die vorstehend genannte Aufgabe wird erfindungsgemäß gelöst durch Angabe einer Suspension von anorganischen Partikeln, umfassend oder bestehend aus:
(a) einer äußeren Phase umfassend oder bestehend aus:
   (a1) mit Isocyanat zu Polyurethan polymerisierbaren Polyol-Monomeren, -Oligomeren und/oder -prepolymeren
      und
   (a2) einer oder mehreren co-polymerisierbaren oder nicht co-polymerisierbaren organischen Säuren
      und
(b) einer dispergierten Phase bestehend aus:
   oberflächenmodififierten und/oder nicht oberflächenmodifizierten anorganischen Partikeln, wobei die anorganischen Partikel eine mittlere Teilchengröße von maximal 200 nm, vorzugsweise maximal 100 nm besitzen, wobei die Art und die Menge der co-polymerisierbaren oder nicht co-polymerisierbaren organischen Säure bzw. Säuren so ausgewählt ist, dass die oberflächenmodifizierten und/oder nicht oberflächenmodifizierten anorganischen Partikel nach Vermischen von 1 Gewichtsteil Hexamethylendiisocyanat-Biuret (HDI-Biuret) mit 1 Gewichtsteil der Suspension gegen Zusammenballung zu Partikeln einer mittleren Teilchengröße von zumindest 1000 nm stabilisiert sind.

Es versteht sich, dass das HDI-Biuret insoweit als Testsubstanz eingesetzt wird und nicht selbst Bestandteil der erfindungsgemäßen Suspension ist.

Bevorzugt ist eine erfindungsgemäße Suspension, wobei
(I) die anorganischen Partikel SiO₂-Partikel sind, wobei die SiO₂-Partikel mittels eines Sol-Gel-Verfahrens herstellbar sind und eine mittlere Teilchengröße von maximal 100 nm besitzen,
   oder
(II) die anorganischen Partikel anorganische Nano-Partikel sind, wobei die Suspension frei ist von SiO₂-Partikeln, die mittels eines Sol-Gel-Verfahrens herstellbar sind.

Wie bereits oben ausgeführt, beziehen sich (I) und (II) auf zwei alternative Aspekte der vorliegenden Erfindung.

Ein geeignetes HDI-Biuret ist beispielsweise von der Firma Bayer unter dem Namen Desmodur N 100 kommerziell erhältlich.

Gemäß Alternative (II) bevorzugt sind anorganische Nano-Partikel (d.h. gemäß Alternative (II) bevorzugt ist eine erfindungsgemäße Suspension umfassend in oder als Komponente (b) Partikel) umfassend oder bestehend aus SiO₂, TiO₂, Al₂O₃, ZrO₂, SiC, anderen oxidischen und/oder keramischen Materialien, Diamant oder aber Kombinationen der genannten Materialien. Hierbei ist gegebenenfalls zwischen keramischen und amorphen Partikeln zu unterscheiden. Im Fall von keramischen Partikeln sind SiO₂, TiO₂, Al₂O₃ und ZrO₂ bevorzugt, was bedeutet, dass die Partikel alternativ (i) lediglich ein keramisches Material umfassen, das ausgewählt ist aus der soeben genannten Liste, (ii) mehrere keramische Phasen umfassen, die jeweils ausgewählt sind aus der soeben genannten Liste, (iii) mehrere keramische Phasen umfassen, von denen eine einzige ausgewählt ist aus der soeben genannten Liste und mehr als 50 Gew.-% aller enthaltenen keramischen Phasen ausmacht, oder (iv) mehrere keramische Phasen umfassen, von denen zwei oder mehr ausgewählt sind aus der soeben genannten Liste und zusammen mehr als 50 Gew.-% aller enthaltenen keramischen Phasen ausmachen. Im Fall von amorphen Partikeln ist bevorzugt, dass die anorganischen Nano-Partikel aus SiO₂, TiO₂, Al₂O₃ oder ZrO₂ bestehen, vorzugsweise aus SiO₂.

Sofern gemäß Alternative (II) die dispergierte Phase (b) SiO₂-Partikel enthält, sind diese nicht mittels eines Sol-Gel-Verfahrens herstellbar. Die hierbei erfindungsgemäß einzusetzenden SiO₂-Partikel sind vorzugsweise amorph. Bevorzugte Verfahren zur Herstellung solcher SiO₂-Partikel umfassen die Reaktion von Siliciumtetrachlorid mit Wasser, welches in einer Wasserstoffflamme gebildet wird (zur Herstellung pyrogener SiO₂-Partikel). Andere anorganische Nano-Partikel können mittels diverser Verfahren hergestellt werden, die dem Fachmann geläufig sind (z.B. Herstellung im Plasma oder - bei Diamant - mittels Explosion in einem abgeschlossenen Volumen). Die metalloxidischen Nano-Partikel können aus Metallalkoholaten mittels Sol-Gel-Prozessen hergestellt werden.

Eine gute Stabilisierung wird im Falle der obigen Alternativen (I) bzw. (II) regelmäßig erreicht, wenn zumindest 1 mol organische Säure pro (I) 225 g SiO₂-Partikeln bzw. (II) 6 mol der anorganischen Ausgangsmaterialien der Nano-Partikel eingesetzt wird (Im gemäß Alternative (II) bevorzugten Fall von SiO₂-Partikeln entspricht dies 225 g der SiO₂-Partikel). Bevorzugte organische Säuren sind unten angegeben.

Eine erfindungsgemäße Suspension umfasst oder besteht aus einer äußeren Phase (a) und einer dispergierten Phase (b). Die äußere Phase umfasst oder besteht aus (a1) polymerisierbaren Monomeren, Oligomeren und/oder Prepolymeren und (a2) einer oder mehreren organischen Säuren (wobei der Begriff "Säure" auch die entsprechenden Säureanhydride umfasst). Die Säuren (bevorzugt Carbonsäuren, insbesondere Monocarbonsäuren, vorzugsweise Monocarbonsäuren mit 2 oder mehr C-Atomen) sind vorzugsweise co-polymerisierbar; nicht co-polymerisierbare organische Säuren können jedoch ebenfalls eingesetzt werden, vorzugsweise neben co-polymerisierbaren Säuren. Die dispergierte Phase (b) einer erfindungsgemäßen Suspension besteht aus oberflächenmodifizierten und/oder nicht oberflächenmodifizierten anorganischen Partikeln (insbesondere den besagten (I) SiO₂-Partikeln bzw. (II) anorganischen Nano-Partikeln). Oberflächenmodifizierte Partikel (insbesondere oberflächenmodifizierte besagte (I) SiO₂-Partikel bzw. (II) Nano-Partikel) sind bevorzugt, insbesondere oberflächenmodifizierte SiO₂-Partikel, die sich aus nicht oberflächenmodifizierten SiO₂-Partikeln beispielsweise durch Umsetzung mit einem Organosilan erhalten lassen, z.B. durch Umsetzung mit Methacrylsilan, Octylsilan, Hexadecylsilan, HMDS oder Dimethyldichlorsilan. Vorzugsweise sind solche SiO₂-Partikel amorph.

Auch oberflächenmodifizierte SiO₂-Partikel besitzen regelmäßig in gewissen Umfang noch freie Hydroxygruppen. Auch oberflächenmodifizierte anorganische Nano-Partikel besitzen regelmäßig in gewissem Umfang noch freie Hydroxygruppen, sofern sie aus einem Material bestehen, das in nichtoberflächenmodifiziertem Zustand über freie Hydroxygruppen verfügt.

Die erfindungsgemäß in der dispergierten Phase (b) vorhandenen anorganischen Partikel besitzen eine mittlere Teilchengröße von maximal 200 nm, vorzugsweise maximal 100 nm. Die SiO₂-Partikel gemäß Alternative (I) besitzen eine mittlere Teilchengröße von maximal 100 nm; die anorganischen Nano-Partikel gemäß Alternative (II) besitzen eine mittlere Teilchengröße von maximal 200 nm. Die mittlere Teilchengröße der Partikel (insbesondere der besagten (I) SiO₂-Partikel bzw. (II) Nano-Partikel) in der Suspension wird dabei mittels Photonenkorrelationsspektroskopie (PCS) bestimmt (vgl. RÖMPP online; Müller, R. H., Schumann, R., Teilchengrößenmessung in der Laborpraxis, Wissenschaftliche Verlagsgesellschaft Stuttgart, (1996).

Die gemäß Alternative (I) in der dispergierten Phase (b) vorhandenen (üblicherweise amorphen) SiO₂-Partikel sind mittels eines Sol-Gel-Verfahrens herstellbar. Ein bevorzugtes Verfahren zur Herstellung der SiO₂-Partikel der dispergierten Phase (b) einer erfindungsgemäße Suspension ist ein Verfahren mit den Schritten a) bis f) gemäß EP 1 366 112 B1.

Art und Menge der (vorzugsweise co-polymerisierbaren) organischen Säure (dieser Begriff umfasst auch die entsprechenden Säureanhydride) beziehungsweise der organischen Säuren, die als Komponente (a2) Bestandteil der äußeren Phase (a) einer erfindungsgemäßen Suspension sind, sind erfindungsgemäß so ausgewählt, dass die Partikel (insbesondere die besagten (I) SiO₂-Partikel bzw. (II) anorganischen Nano-Partikel) (gemäß Komponente (b)) nach Vermischen von 1 Gewichtsteil Hexamethylendiisocyanat-Biuret (HDI-Biuret) mit 1 Gewichtsteil der Suspension gegen Zusammenballung zu Partikeln einer mittleren Teilchengröße von zumindest 1000 nm stabilisiert sind.

Die anorganischen Partikel (insbesondere die besagten (I) (üblicherweise amorphen) SiO₂-Partikel bzw. (II) anorganischen Nano-Partikel) gelten im Rahmen der vorliegenden Erfindung als stabilisiert, wenn es nach Vermischen von Hexamethylendiisocyanat-Biuret mit der erfindungsgemäßen Suspension in dem angegebenen Mengenverhältnis nicht oder im Vergleich mit einer Suspension, die bei ansonsten gleicher Zusammensetzung keine Komponente (a2) umfasst, nur verzögert zu einer Zusammenballung der Partikel (insbesondere der besagten (I) SiO₂-Partikel bzw. (II) anorganischen Nano-Partikel) anorganischen Nano-Partikel der Komponente (b) zu Partikeln mit einer mittleren Teilchengröße von zumindest 1000 nm kommt, insbesondere nicht oder nur verzögert zur Ausflockung, Gelierung oder einer Trübung oder Eintrübung.

Der Quotient aus den Geschwindigkeitskonstanten der Zusammenballung (Flockulation, Agglomeration, Aggregation) der Vergleichs-Suspension ohne Anwesenheit der Komponente (a2) (d. h. ohne Anwesenheit einer organischen Säure) und einer erfindungsgemäßen Suspension mit Komponente (a2) wird Stabilitätsquotient W genannt. Vorzugsweise ist eine erfindungsgemäße Suspension derart stabil gegen die Zusammenballung der Partikel (insbesondere der besagten (I) SiO₂-Partikel bzw. (II) anorganischen Nano-Partikel) der Komponente (b), dass der Stabilitätsquotient W einen Wert von zumindest 10², vorzugsweise zumindest 10³, besonders vorzugsweise zumindest 10⁴, ganz besonders bevorzugt zumindest 10⁵ besitzt.

Die Monomeren, Oligomeren und/oder Prepolymeren der Komponente (a1) der äußeren Phase einer erfindungsgemäßen Suspension sind polymerisierbar. Dies bedeutet, dass Sie in höhermolekulare Verbindungen (z.B. Polymere, Makromoleküle oder Polymerisate) überführt werden können. Der Begriff "polymerisierbar" umfasst im Rahmen der vorliegenden Erfindung auch die Möglichkeit der Vernetzung.

Monomere im Sinne der vorliegenden Erfindung sind vorzugsweise Verbindungen, aus denen über Polyreaktionen Polymere aufgebaut werden können. Diese Polyreaktionen können dabei Kettenreaktionen oder Stufenreaktionen, wie Polyaddition beziehungsweise Polykondensation sein. Monomere können erfindungsgemäß als Einzelsubstanzen oder in Form von Substanzgemischen (neben weiteren Monomeren, Oligomeren und/oder Prepolymeren) eingesetzt werden. Bevorzugt ist der Einsatz von Monomeren, die so polymerisierbar sind, dass sie eine konstitutionelle Einheit bilden, deren vielfache Wiederholung als konstitutionelle Repetiereinheit identifizierbar ist.

Oligomere sind Verbindungen, in deren Molekülen nur wenige Atome oder Atom-Gruppen (konstitutionelle Einheiten) gleicher oder verschiedener Art wiederholt miteinander verknüpft sind.

Prepolymere sind oligomere oder selbst bereits polymere Verbindungen, die als Vor- oder Zwischenprodukte zur Synthese von Polymeren eingesetzt werden können.

Eine erfindungsgemäße Suspension kann neben den Komponenten (a1) und (a2) in der äußeren Phase weitere Komponenten besitzen (siehe dazu auch unten). Eine erfindungsgemäße Suspension kann zudem neben der dispergierten Phase (b) eine weitere dispergierte Phase umfassen, beispielsweise (I) anorganische Partikel (insbesondere SiO₂-Partikel) einer mittleren Teilchengröße von mehr als 100 nm bzw. (II) weitere anorganische Partikel (insbesondere Nano-Partikel, bevorzugt SiO₂-Nano-Partikel) einer mittleren Teilchengröße von mehr als 200 nm. Vorzugsweise liegt die Suspension dann als bi- oder multimodale Mischung dispergierter Phasen vor.

Sofern gemäß Alternative (I) eine erfindungsgemäße Suspension neben den SiO₂-Partikeln der dispergierten Phase (b) weitere SiO₂-Partikel umfasst, werden diese vorzugsweise so gewählt, dass sie sich nicht nur in ihrer mittleren Teilchengröße von den SiO₂-Partikeln der dispergierten Phase (b) unterscheiden, sondern zusätzlich aufgrund zumindest einer weiteren chemischen oder physikalischen Eigenschaft. Beispielsweise können neben den SiO₂-Partikeln der dispergierten Phase (b) als Bestandteil einer weiteren dispergierten Phase (c) SiO₂-Partikel vorgesehen sein, die nicht mittels eines Sol-Gel-Verfahrens herstellbar sind.

Vorzugsweise sind gemäß Alternative (I) in einer erfindungsgemäßen Suspension neben den SiO₂-Partikeln der dispergierten Phase (b) keine weiteren SiO₂-Partikel vorhanden, die mittels eines Sol-Gel-Verfahrens herstellbar sind.

Sofern gemäß Alternative (II) eine erfindungsgemäße Suspension neben den anorganischen Nano-Partikeln der dispergierten Phase (b) weitere Partikel umfasst, werden diese vorzugsweise so gewählt, dass sie sich nicht nur in ihrer mittleren Teilchengröße von den Nano-Partikeln der dispergierten Phase (b) unterscheiden, sondern zusätzlich aufgrund zumindest einer weiteren chemischen oder physikalischen Eigenschaft. Beispielsweise können neben den anorganischen Nano-Partikeln der dispergierten Phase (b) als Bestandteil einer weiteren dispergierten Phase (c) Partikel vorgesehen sein, die aus anderen Materialien als die anorganischen Nano-Partikel der dispergierten Phase (b) bestehen.

Falls gemäß Alternative (II) die dispergierte Phase (b) SiO₂-Partikel umfasst, sind vorzugsweise in einer erfindungsgemäßen Suspension keine weiteren SiO₂-Partikel enthalten. Falls die dispergierte Phase (b) anorganische Nano-Partikel aus anderen Materialien als SiO₂ umfasst, sind in einer erfindungsgemäßen Suspension vorzugsweise keine weiteren Nano-Partikel aus den soeben genannten Materialien vorhanden.

Die Erfindung beruht auf der überraschenden Erkenntnis, dass organische Säuren (einschließlich der entsprechenden Anhydride) dispergierte oberflächenmodifizierte und/oder nicht oberflächenmodifizierte anorganische Partikel, die eine mittlere Teilchengröße von maximal 200 nm besitzen (insbesondere (I) SiO₂-Partikel, die mittels eines Sol-Gel-Verfahrens herstellbar sind und eine mittlere Teilchengröße von maximal 100 nm besitzen bzw. (II) anorganische Nano-Partikel), in einer äußeren Phase stabilisieren können, die polymerisierbare Monomere, Oligomere und/oder Prepolymere umfasst. "Stabilisieren" bedeutet dabei, wie oben ausgeführt, dass nach Vermischen von 1 Gewichtsteil Hexamethylendiisocyanat-Biuret mit 1 Gewichtsteil der Suspension eine Zusammenballung der anorganischen Partikel (insbesondere die besagten (I) SiO₂-Partikel bzw. (II) anorganischen Nano-Partikel) zu Partikeln einer mittleren Teilchengröße von zumindest 1000 nm verhindert oder zumindest deutlich verlangsamt wird. Dabei ist zu berücksichtigen, dass erfindungsgemäße Suspensionen zwar definitionsgemäß zumindest so stabilisiert sind, dass es nach Vermischen von 1 Gewichtsteil Hexamethylendiisocyanat-Biuret mit 1 Gewichtsteil der Suspension nicht oder nur verlangsamt zu einer Zusammenballung zu Partikeln einer mittleren Teilchengröße von zumindest 1000 nm kommt, dies aber ganz allgemein bedeutet, dass auch bei Vermischen mit anderen Isocyanaten oder bei Vermischen mit (weiteren bzw. anderen) Bindemittelkomponenten, Lösungsmitteln, Reaktionspartnern, Additiven oder dergleichen im Regelfall eine Zusammenballung der anorganischen Partikel (insbesondere der besagten (I) SiO₂-Partikel bzw. (II) anorganischen Nano-Partikel) der Komponente (b) nicht oder nur verlangsamt stattfindet.

Vorzugsweise sind in einer erfindungsgemäßen Suspension, insbesondere gemäß obigen Alternativen (I) bzw. (II), einzelne oder sämtliche der polymerisierbaren Monomeren, Oligomeren und/oder Prepolymeren der Komponente (a1) mittels Additionsreaktion polymerisierbar. Von den für eine gegebene Polyadditionsreaktion erforderlichen Monomeren müssen in einer erfindungsgemäßen Suspension nicht sämtliche vorhanden sein. So kann beispielsweise von den zwei Monomertypen, die für die Bildung von Polyurethan erforderlich sind (z.B. Diol und Diisocyanat) lediglich eine (z.B. das Diol) in der erfindungsgemäßen Suspension vorliegen. Eine entsprechende erfindungsgemäße Suspension ist dann lediglich dafür vorbereitet, mit dem weiteren für die Polyadditionsreaktion erforderlichen Monomer (z.B. Diisocyanat) versetzt zu werden.

Eine erfindungsgemäße Suspension (insbesondere gemäß obigen Alternativen (I) bzw. (II)) ist eine, in der die äußere Phase (a) umfasst oder besteht aus:
(a1) mit Isocyanat zu Polyurethan polymerisierbaren Polyol-Monomeren, -Oligomeren und/oder -Prepolymeren
   und
(a2) einer oder mehreren co-polymerisierbaren oder nicht co-polymerisierbaren organischen Säuren.

Vorzugsweise umfasst die äußere Phase (a) dabei als Komponente (a3) auch ein geblocktes oder ungeblocktes Isocyanat zur Umsetzung mit der Komponente (a1).

Vorzugsweise ist die äußere Phase einer erfindungsgemäßen Suspension (insbesondere gemäß obigen Alternativen (I) bzw. (II)) ein Dual-Cure-System, insbesondere eines, das eine Additionspolymerisation (vorzugsweise eine Polyol/Isocyanat-Reaktion) und eine radikalische Polymerisation (vorzugsweise eine photoinitiierte radikalische Polymerisation) emöglicht.

Erfindungsgemäße Suspensionen, deren äußere Phase ein Dual-Cure-System ist, sind insbesondere für Automobillackierungen (Industrieladcierungen) einsetzbar; die erfindungsgemäße Suspension wird dann regelmäßig als Klarlack formuliert, wobei dieser Klarlack durch den Anteil der Komponente (b) vorteilhafte Eigenschaften erhält, wie sie oben in der Einleitung angegeben sind.

Ein weiteres Einsatzgebiet für erfindungsgemäße Suspensionen mit einer äußeren Phase, bei der es sich um ein Dual-Cure-System handelt, ist die Verbesserung der Folienapplikationstechnik für z.B. In-Mold-Verfahren. In einem solchen Verfahren wird eine (vorzugsweise thermoplastische) Trägerfolie mit einer oder mehreren Lackschichten versehen.

Erfindungsgemäße Suspensionen mit einer äußeren Phase, bei der es sich um ein Dual-Cure-System handelt, eignen sich hierbei insbesondere zum Einsatz als Klarlack, der durch die Anwesenheit von Komponente (B) die oben erwähnten vorteilhaften Eigenschaften besitzt. Nach dem Auftrag einer Lackschicht wird die Folie vorzugsweise getrocknet,
wobei die Lackschicht vorzugsweise im Wesentlichen noch chemisch ungehärtet bleibt. Die Trocknung erfolgt vorzugsweise physikalisch, beispielsweise thermisch wie etwa in einem Umluftofen. Vorzugsweise wird die Folie anschließend durch Tiefziehen (insbesondere unter Erwärmung) in eine gewünschte dreidimensionale Form gebracht. Vorzugsweise wird bzw. werden danach die Lackschicht bzw. -schichten durch geeignete Methoden gehärtet, z.B. durch Additionspolymerisation und radikalische Polymerisation. Vorzugsweise wird die geformte und gehärtete Folie anschließend auf der nicht mit der oder den Lackschichten versehenen Seite mit Kunststoff verstärkt, insbesondere durch Hinterspritzen oder Hinterschäumen. Es kann alternativ vorgesehen sein, einen der Härtungsschritte vor dem Tiefziehen durchzuführen.

Sofern es sich bei der äußeren Phase einer erfindungsgemäßen Suspension um ein Dual-Cure-System handelt, ermöglicht dieses zwei netzwerkbildende Reaktionsmechanismen, vorzugsweise (i) eine Additionspolymerisation (z. B. Polyol-/Isocyanat-Reaktion sowie (ii) eine radikalische Polymerisation).

Vorzugsweise sind die bevorzugten erfindungsgemäßen Suspensionen, welche als Komponente (a1) mit Isocyanat zu Polyurethan polymerisierbare Polyol-Monomere, - Oligomere und/oder Prepolymere umfassen, in ihrer äußeren Phase als Dual-Cure-System ausgestaltet.

Sofern die äußere Phase einer erfindungsgemäßen Suspension ein Dual-Cure-System ist, ist es vorteilhaft, wenn darin
(i) die Monomeren, Oligomeren und/oder Prepolymeren der Komponente (a1) sowohl radikalisch (z. B. photoinitiiert) als auch nicht-radikalisch (z. B. durch Additionsreaktion) polymerisierbar sind
   oder
(ii) die Monomeren, Oligomeren und/oder Prepolymeren der Komponente (a1) ausschließlich nicht-radikalisch (z. B. durch Additionsreaktion) polymerisierbar sind und die äußere Phase als zusätzliche Komponente
(a4) radikalisch polymerisierbare (z. B. photoinitiiert polymerisierbare) Monomere, Oligomere und/oder Prepolymere umfasst.

Beispiele für Monomere, Oligomere und/oder Prepolymere der Komponente (a1), die sowohl radikalisch als auch nicht-radikalisch polymerisierbar sind, sind z. B. HEA, HEMA, Laromer LR 9000 (BASF), Urethanacrylat 00-022 (Rahn).

Beispiele für Monomere, Oligomere und/oder Prepolymere der Komponente (a1), die ausschließlich nicht-radikalisch polymerisierbar sind, sind OH-funktionelle Harze und deren Härter, z.B. Desmophen-Typen und Desmodur-Härter (beide Bayer), bevorzugt z. B. Desmophen 1200 und Desmodur N 100.

Beispiele für radikalisch polymerisierbare Monomere, Oligomere und/oder Prepolymere, die vorzugsweise neben den nicht-radikalisch polymerisierbaren Verbindungen als Komponente (a4) eingesetzt werden, sind UV-funktionelle Harze und Reaktivverdünner, z. B. Laromer-Typen (BASF), HDDA, PETIA.

Die äußere Phase einer bevorzugten erfindungsgemäßen Suspension umfasst als zusätzliche Komponente
(a5) einen oder mehrere Photoinitiatoren zur Initiierung der radikalischen Polymerisation der radikalisch polymerisierbaren Monomere, Oligomere und/oder Prepolymere (der Komponente (a1), soweit vorhanden).

Beispiele für besonders geeignete Photoinitiatoren zur Initiierung der radikalischen Polymerisation der radikalisch polymerisierbaren Verbindungen sind alpha-Hydroxyhetone, Phenylglyoxylate, alpha-Aminoketone oder dergleichen, z. B. Irgacure 184 (1-Hydroxycycohexyl(phenyl)methanon, Ciba).

Vorzugsweise sind in einer erfindungsgemäßen Suspension (insbesondere gemäß obigen Alternativen (I) bzw. (II)) die eine bzw. eine, mehrere oder sämtliche der organischen Säuren (vorzugsweise Carbonsäuren) der Komponente (a2) co-polymerisierbar.

Bevorzugt ist es, wenn die eine beziehungsweise eine, mehrere oder sämtliche der organischen Säuren (vorzugsweise Carbonsäuren, insbesondere Monocarbonsäuren) der Komponente (a2)
(i) mit Isocyanat co-polymerisierbar sind
   oder
(ii) radikalisch co-polymerisierbar sind.

Bevorzugt sind gemäß besagter Alternative (I) erfindungsgemäße Suspensionen, umfassend in oder als Komponente (b) SiO₂-Partikel, die mittels eines Organosilans (siehe dazu oben) oberflächenmodifiziert sind.

Bevorzugt sind gemäß besagter Alternative (II) erfindungsgemäße Suspensionen, umfassend in oder als Komponente (b) oberflächenmodifizierte anorganische Nano-Partikel, vorzugsweise SiO₂-Partikel, insbesondere amorphe SiO₂-Partikel, die mittels eines Organosilans (siehe dazu oben) oberflächenmodifiziert sind.

Erfindungsgemäße Suspensionen (insbesondere gemäß obigen Alternativen (I) bzw. (II)) umfassen vorzugsweise zumindest 0,5 Gew.-%, vorzugsweise zumindest 5 Gew.-%, besonders bevorzugt zumindest 20 Gew.-% an dispergierter Phase (b), bezogen auf das Gesamtgewicht der Suspension.

In einer bevorzugten erfindungsgemäßen Suspension (insbesondere gemäß obigen Alternativen (I) bzw. (II)) ist die bzw. sind eine, mehrere oder sämtliche der co-polymerisierbaren oder nicht co-polymerisierbaren organischen Säuren der Komponente (a2) Carbonsäuren, vorzugsweise Monocarbonsäuren mit 2 oder mehr C-Atomen und bevorzugt ausgewählt aus der Gruppe bestehend aus:

Acrylsäure, Methacrylsäure, Essigsäure und deren Anhydride.

Besonders bevorzugt sind Acrylsäure und Methacrylsäure.

Vorzugsweise handelt es sich bei der erfindungsgemäßen Suspension (insbesondere in einer der vorstehend als bevorzugt angegebenen Ausgestaltungen, vorzugsweise gemäß obigen Alternativen (I) bzw. (II)) um ein Lacksystem (Lackformulierung, Lack), vorzugsweise um ein Klarlacksystem (Klarlackformulierung, Klarlack), insbesondere zur Verwendung im Automobilbereich (Industriebereich), oder um ein pigmentiertes Lacksystem (pigmentierte Lackformulierung, pigmentierter Lack). Eine erfindungsgemäße Suspension, die ein Lacksystem ist, wird vorzugsweise unter Einsatz einer oder mehrerer üblicher Lackkomponenten hergestellt, beispielsweise indem eine erste erfindungsgemäße Suspension hergestellt oder bereitgestellt und mit üblichen Lackkomponenten gemischt wird.

Die Erfindung betrifft auch ein Verfahren zur Herstellung einer erfindungsgemäßen Suspension. Ein solches erfindungsgemäßes Verfahren umfasst die folgenden Schritte:
- Bereitstellen einer Vor-Suspension umfassend
   (a) eine äußere Phase
      und
   (b) eine dispergierte Phase bestehend aus:
      oberflächenmodifizierten und/oder nicht oberflächenmodifizierten anorganischen Partikeln, wobei die anorganischen Partikel eine mittlere Teilchengröße von maximal 200 nm, vorzugsweise maximal 100 nm besitzen,
- Mischen der bereitgestellten Vor-Suspension mit
   (a2) einer oder mehreren co-polymerisierbaren oder nicht co-polymerisierbaren organischen Säuren oder Säureanhydriden,
   wobei die Art und die Menge der co-polymerisierbaren oder nicht co-polymerisierbaren organischen Säure bzw. Säuren so ausgewählt ist, dass die oberflächenmodifizierten und/oder nicht oberflächenmodifizierten anorganischen Partikel nach Vermischen von 1 Gewichtsteil Hexamethylendüsocyanat-Biuret mit 1 Gewichtsteil der Suspension gegen Zusammenballung zu Partikeln einer mittleren Teilchengröße von zumindest 1000 nm stabilisiert sind.

Bevorzugt ist ein erfindungsgemäßes Verfahren, wobei
(I) die anorganischen Partikel SiO₂-Partikel sind, wobei die SiO₂-Partikel mittels eines Sol-Gel-Verfahrens herstellbar sind und eine mittlere Teilchengröße von maximal 100 nm besitzen,
   oder
(II) die anorganischen Partikel anorganische Nano-Partikel sind, wobei die Suspension frei ist von SiO₂-Partikeln, die mittels eines Sol-Gel-Verfahrens herstellbar sind.

Hinsichtlich der bevorzugten Ausgestaltung der Komponenten (a), (b) und (a2) gilt dabei das vorstehend hinsichtlich der erfindungsgemäßen Suspension Gesagte entsprechend.

Vorzugsweise wird in einem erfindungsgemäßen Herstellverfahren die durch Mischen der Vor-Suspension mit der Komponente (a2) hergestellte Mischung auf einer Temperatur im Bereich von 60 °C bis 110 °C, vorzugsweise 75 °C bis 85 °C, bevorzugt 75 °C bis 80 °C, gehalten. Vorzugsweise wird die Temperatur für einen Zeitraum von zumindest 60 Minuten, vorzugsweise 90 Minuten gehalten.

In einem erfindungsgemäßen Verfahren, insbesondere gemäß obigen Alternativen (I) bzw. (II), kann die äußere Phase (a) die oben für die erfindungsgemäße Suspension definierte Komponente (a1) umfassen oder aus dieser Komponente bestehen. Alternativ kann die äußere Phase in einem erfindungsgemäßen Verfahren auch ausschließlich aus anderen Verbindungen bestehen, die dann insgesamt die Funktion eines Dispersionsmittels für die Phase (b) erfüllen müssen. Sofern die äußere Phase (a) einer erfindungsgemäß bereitzustellenden Vor-Suspension noch keine polymerisierbare Komponente (a1) umfasst, muss diese zu einem späteren Zeitpunkt hinzugegeben werden. Beispielsweise kann die äußere Phase (a) der Vor-Suspension übliche Lösungsmittel umfassen, die dann im Wege des Lösungsmittelaustausches gegen die Komponente (a1), d.h. gegen die polymerisierbaren Monomeren, Oligomeren und/oder Prepolymeren ausgetauscht werden.

Die vorliegende Erfindung betrifft auch die Verwendung einer co-polymerisierbaren oder nicht co-polymerisierbaren organischen Säure (vorzugsweise Carbonsäure, bevorzugt Monocarbonsäure, besonders bevorzugt Monocarbonsäure mit 2 oder mehr C-Atomen) als Stabilisierungsmittel zur Stabilisierung
(I) oberflächenmodifizierter und/oder nicht oberflächenmodifizierter (vorzugsweise amorpher) SiO₂-Partikel gegen ein Zusammenballen in einer Suspension, wobei die SiO₂-Partikel vorzugsweise mittels eines Sol-Gel-Verfahrens herstellbar sind,
   oder
(II) oberflächenmodifizierter und/oder nicht oberflächenmodifizierter anorganischer Nano-Partikel gegen ein Zusammenballen in einer Suspension, mit der Maßgabe, dass die anorganischen Nano-Partikel keine SiO₂-Partikel sind, die mittels eines Sol-Gel-Verfahrens herstellbar sind.

Insbesondere bevorzugt gemäß Alternative (II) ist die Verwendung zur Stabilisierung oberflächenmodifizierter und/oder nicht oberflächenmodifizierter amorpher SiO₂-Partikel, die nicht mittels eines Sol-Gel-Verfahrens herstellbar sind.

Die vorliegende Erfindung betrifft weiterhin gemäß Alternative (II) die Verwendung einer co-polymerisierbaren oder nicht co-polymerisierbaren organischen Säure (vorzugsweise Carbonsäure, bevorzugt Monocarbonsäure, besonders bevorzugt Monocarbonsäure mit 2 oder mehr C-Atomen) als Stabilisierungsmittel zur Stabilisierung oberflächenmodifizierter und/oder nicht oberflächenmodifizierter anorganischer Nano-Partikel gegen ein Zusammenballen in einer Suspension, mit der Maßgabe, dass die anorganischen Nano-Partikel keine SiO₂-Partikel sind.

Schließlich betrifft die vorliegende Erfindung auch teil- und vollausgehärtete Dispersionen, die durch Polymerisation zumindest der Komponente (a1) bzw. (a4) einer erfindungsgemäßen Suspension, vorzugsweise gemäß obigen Alternativen (I) bzw. (II), herstellbar sind.

Die Erfindung wird nachfolgend anhand von Beispielen näher erläutert:

### Beispiele:

Beispiele 1 bis 4 betreffen anorganische Partikel, die SiO₂-Partikel sind, wobei die SiO₂-Partikel mittels eines Sol-Gel-Verfahrens herstellbar sind (gemäß Aspekt (I) der vorliegenden Erfindung),

Beispiele 5 bis 8 betreffen anorganische Partikel, die anorganische Nano-Partikel sind, wobei die Suspension frei ist von SiO₂-Partikeln, die mittels eines Sol-Gel-Verfahrens herstellbar sind (gemäß Aspekt (II) der vorliegenden Erfindung).

### Beispiel 1: Vermischen einer stabilisierten Suspension von SiO₂-Partikeln mit HDI-Biuret

### 1.1 Stabilisierte Suspension von SiO₂-Partikeln

Vorgelegt wird eine im Folgenden als Nanocryl XP21/3724 bezeichnete Suspension bestehend aus:
- 36 g: Oberflächenmodifizierte SiO₂-Nanopartikel (nach einem Sol-Gel-Verfahren hergestellt, mittlere Größe 20 nm,
- 45g: Urethanacrylat-Oligomer (Ebecryl 1290, Fa. Cytec)
- 9 g: HDDA

Unter Rühren fügt man 10 g Acrylsäure hinzu, rührt weitere 5 min und inkubiert anschließend 90 min bei 75°C. Die so hergestellte Mischung ist klar.

### 1.2 Vermischen mit HDI-Biuret

100 g eines aliphatischen Polyisocyanats (HDI-Biurets, Desmodur N 100) werden zu 100 g einer stabilisierten Suspension von SiO₂-Partikeln aus 1.1 unter Rühren zugefügt. Es ist keine Trübung feststellbar.

### Beispiel 2 (nicht erfindungsgemäß): Vermischen einer nicht-stabilisierten Suspension von SiO₂-Partikeln mit HDI-Biuret

100 g eines aliphatischen Polyisocyanats (HDI-Biurets, Desmodur N 100) werden 100 g einer nicht-stabilisierten Suspension von SiO₂-Partikeln (Nanocryl XP21/3724) unter Rühren zugefügt. Bereits bei Betrachtung mit bloßem Auge ist eine Trübung und ein Viskositätsanstieg feststellbar.

### Beispiel 3: Lack hergestellt unter Verwendung einer stabilisierten Suspension von SiO₂-Partikeln

### 3.1 Stabilisierte Suspension von SiO₂-Partikeln

Eine stabilisierte Suspension von SiO₂-Partikeln wird hergestellt wie unter Beispiel 1.1 beschrieben.

### 3.2 Lackkomponente A

70 g der stabilisierten Suspension von SiO₂-Partikeln aus 3.1 werden vorgelegt. Unter Rühren werden die folgenden Komponenten nacheinander einzeln zugefügt, wobei nach jeder Zugabe 5 min weiter gerührt wird: 10 g eines hydroxylgruppenhaltigen Polyesters (Desmophen 800), 10 g 2-Hydroxyethylmethylacrylat, 9 g Hexandioldiacrylat und 1 g einer Lösung von 1 Gew.-% Dibutylzinndilaurat in Hexandioldiacrylat. Nach jedem Rührvorgang wird die jeweilige Mischung visuell kontrolliert. Hierbei ist in keinem Fall eine Trübung feststellbar.

### 3.3 Lackkomponente B

27,9 g eines aliphatischen Polyisocyanats (HDI-Biurets, Desmodur N 100) werden vorgelegt. Unter Rühren fügt man 13,8 g einer Lösung von 10 Gew.-% eines Photoinitiators (Irgacure 184) in Butylacetat hinzu und rührt weitere 5 min. Die so hergestellte Mischung ist klar.

### 3.4 Lack

Lackkomponente A aus 3.2 wird vorgelegt und Lackkomponente B aus 3.3 unter gründlichem Rühren zugefügt. Es wird keine Eintrübung und kein Viskositätsanstieg beobachtet. Die Mischung wird in einer Schichtdicke von ca. 200 µm auf eine Glasplatte mittels eines Kastenrakels wie folgt aufgetragen: Anschließend erfolgt eine ofentrocknung für 10 min. bei 75 °C; danach eine UV-Härtung (8 s bei 100 W/cm mit einem Abstand von 20 cm). Es wird keine Trübung der gehärteten Schicht festgestellt.

### Beispiel 4 (nicht erfindungsgemäß): Lack hergestellt unter Verwendung einer nicht-stabilisierten Suspension von SiO₂-Partikeln

### 4.1 Lackkomponente A'

63 g einer nicht-stabilisierten Suspension von SiO₂-Partikeln (Nanocryl XP21/3724) werden vorgelegt. Unter Rühren werden die folgenden Komponenten nacheinander einzeln zugefügt, wobei nach jeder Zugabe 5 min weiter gerührt wird: 10 g eines hydroxylgruppenhaltigen Polyesters (Desmophen 800), 10 g 2-Hydroxyethylmethylacrylat, 16 g Hexandioldiacrylat und 1 g einer Lösung von 1 Gew.-% Dibutylzinndilaurat in Hexandioldiacrylat. Nach jedem Rührvorgang wird die jeweilige Mischung visuell kontrolliert. Hierbei ist bei Betrachtung mit bloßem Auge in keinem Fall eine Trübung feststellbar.

### 4.2 Lackkomponente B

Lackkomponente B wird hergestellt wie unter Beispiel 3 beschrieben.

### 4.3 Lack

Lackkomponente A' aus 4.1 wird vorgelegt und Lackkomponente B aus 4.2 unter gründlichem Rühren zugefügt. Bereits mit bloßem Auge ist eine starke Trübung, ein Anstieg der Viskosität sowie z.T. Gelierung zu beobachten. Die Mischung wird wie unter Beispiel 3 beschrieben auf das Substrat aufgetragen und gehärtet. Eine Trübung der gehärteten Schicht ist bereits mit bloßem Auge festzustellen.

### Beispiel 5: Vermischen einer stabilisierten Suspension von anorganischen Nano-Partikeln (pyrogenen SiO₂-Partikeln) mit HDI-Biuret

### 5.1 Suspension von pyrogenen SiO₂-Partikeln

Vorgelegt wird die folgende Mischung aus Bindemittel und aus Reaktivverdünner:
50 g Urethanacrylat-Oligomer (Ebecryl 1290, Fa. Cytec)
20g HDDA.

25 g Aerosil 130 (Degussa AG) werden unter starkem Rühren langsam (Dauer: ca. 1 h) zugegeben. Die Mischung wird für mindestens 5 h bei einer Umfangsgeschwindigkeit von mindestens 25 m/s in einer Dispergiervorrichtung (Dissolver, gezahnte Rührscheibe, z.B. Dispermat TU von VMA Getzmann) dispergiert, wobei Sekundärpartikel zerkleinert werden. Die Mischung wird mindestens 6 h bei erhöhter Temperatur (75°C) gelagert; eingerührte Luft wird entfernt (alternativ wird ein Vakuumdissolver verwendet; eine Lagerung ist dann nicht erforderlich). Es resultiert eine klare bis opake, stark thixotrope Suspension.

### 5.2. Stabilisierte Suspension von pyrogenen SiO₂-Partikeln

Unter Rühren fügt man der Suspension aus 5.1 10 g Acrylsäure hinzu, rührt weitere 5 min und inkubiert anschließend 90 min bei 75°C. Hierdurch wird keine Trübung hervorgerufen.

### 5.3 Vermischen mit HDI-Biuret

100 g eines aliphatischen Polyisocyanats (HDI-Biurets, Desmodur N 100) werden zu 105 g einer stabilisierten Suspension von anorganischen Nano-Partikeln aus 5.2 unter Rühren zugefügt. Hierdurch wird keine Trübung hervorgerufen.

### Beispiel 6 (nicht erfindungsgemäß): Vermischen einer nicht-stabilisierten Suspension von pyrogenen SiO₂-Partikeln mit HDI-Biuret

100 g eines aliphatischen Polyisocyanats (HDI-Biurets, Desmodur N 100) werden 95 g einer nicht-stabilisierten Suspension von pyrogenen SiO₂-Partikeln aus 5.1 unter Rühren zugefügt. Bereits bei Betrachtung mit bloßem Auge ist eine dadurch hervorgerufeneTrübung und ein Viskositätsanstieg feststellbar.

### Beispiel 7: Lack hergestellt unter Verwendung einer stabilisierten Suspension von anorganischen Nano-Partikeln

### 7.1 Stabilisierte Suspension von anorganischen Nano-Partikeln

Eine stabilisierte Suspension von anorganischen Nano-Partikeln wird hergestellt wie unter Beispiel 5.2 beschrieben.

### 7.2 Lackkomponente A

70 g der stabilisierten Suspension von anorganischen Nano-Partikeln aus 7.1 werden vorgelegt. Unter Rühren werden die folgenden Komponenten nacheinander einzeln zugefügt, wobei nach jeder Zugabe 5 min weiter gerührt wird: 10 g eines hydroxylgruppenhaltigen Polyesters (Desmophen 800), 10 g 2-Hydroxyethylmethylacrylat, 9 g Hexandioldiacrylat und 1 g einer Lösung von 1 Gew.-% Dibutylzinndilaurat in Hexandioldiacrylat. Nach jedem Rührvorgang wird die jeweilige Mischung visuell kontrolliert. Hierbei ist in keinem Fall feststellbar, dass eine Trübung hervorgerufen wird.

### 7.3 Lackkomponente B

27,9 g eines aliphatischen Polyisocyanats (HDI-Biurets, Desmodur N 100) werden vorgelegt. Unter Rühren fügt man 13,8 g einer Lösung von 10 Gew.-% eines Photoinitiators (Irgacure 184) in Butylacetat hinzu und rührt weitere 5 min. Die so hergestellte Mischung ist klar.

### 7.4 Lack

Lackkomponente A aus 7.2 wird vorgelegt und Lackkomponente B aus 7.3 unter gründlichem Rühren zugefügt. Es wird keine Eintrübung und kein Viskositätsanstieg beobachtet. Die Mischung wird in einer Schichtdicke von ca. 200 µm auf eine Glasplatte mittels eines Kastenrakels aufgetragen. Anschließend erfolgt eine Ofentrocknung für 10 min bei 75 °C; danach eine UV-Härtung (8 s bei 100 W/cm mit einem Abstand von 20 cm). Es wird keine Trübung der gehärteten Schicht festgestellt.

### Beispiel 8 (nicht erfindungsgemäß): Lack hergestellt unter Verwendung einer nicht-stabilisierten Suspension von Nano-Partikeln

### 8.1 Lackkomponente A'

63 g einer nicht-stabilisierten Suspension von Nano-Partikeln aus 5.1 werden vorgelegt. Unter Rühren werden die folgenden Komponenten nacheinander einzeln zugefügt, wobei nach jeder Zugabe 5 min weiter gerührt wird: 10 g eines hydroxylgruppenhaltigen Polyesters (Desmophen 800), 10 g 2-Hydroxyethylmethylacrylat, 16 g Hexandioldiacrylat und 1 g einer Lösung von 1 Gew.-% Dibutylzinndilaurat in Hexandioldiacrylat. Nach jedem Rührvorgang wird die jeweilige Mischung visuell kontrolliert. Hierbei ist bei Betrachtung mit bloßem Auge in keinem Fall eine Eintrübung feststellbar.

### 8.2 Lackkomponente B

Lackkomponente B wird hergestellt wie unter Beispiel 7 beschrieben.

### 8.3 Lack

Lackkomponente A' aus 8.1 wird vorgelegt und Lackkomponente B aus 8.2 unter gründlichem Rühren zugefügt. Bereits mit bloßem Auge ist eine starke Eintrübung, ein Anstieg der Viskosität sowie z.T. Gelierung zu beobachten. Die Mischung wird wie unter Beispiel 7 beschrieben auf das Substrat aufgetragen und gehärtet. Eine inakzeptable Trübung der gehärteten Schicht ist bereits mit bloßem Auge festzustellen.

## Patentansprüche

1. Suspension von anorganischen Partikeln, umfassend oder bestehend aus:
(a) einer äußeren Phase umfassend oder bestehend aus:
(a1) mit Isocyanat zu Polyurethan polymerisierbaren Polyol-Monomeren, -Oligomeren und/oder -Prepolymeren
und
(a2) einer oder mehreren co-polymerisierbaren oder nicht co-polymerisierbaren organischen Säuren
und
(b) einer dispergierten Phase bestehend aus:
oberflächen modifizierten und/oder nicht oberftächenmodifizierten anorganischen Partikeln, wobei die anorganischen Partikel eine mittlere Teilchengröße von maximal 200 nm, vorzugsweise maximal 100 nm besitzen.
wobei die Art und die Menge der co-polymerisierbaren oder nicht co-polymerisierbaren organischen Säure bzw. Säuren so ausgewählt ist, dass die oberftächenmodifizierten und/oder nicht oberflächenmodifizierten anorganischen Partikel nach Vermischen von 1 Gewichtsteil Hexamethylendiisocyanat-Biuret (HDI-Biuret) mit 1 Gewichtsteil der Suspension gegen Zusammenballung zu Partikeln einer mittleren Teilchengröße von zumindest 1000 nm stabilisiert sind.

2. Suspension nach Anspruch 1, wobei
(I) die anorganischen Partikel SiO₂-Partikel sind, wobei die SiO₂-Partikel mittels eines Sol-Gel-Verfahrens herstellbar sind und eine mittlere Teilchengröße von maximal 100 nm besitzen,
oder
(II) die anorganischen Partikel anorganische Nano-Partikel sind, wobei die Suspension frei ist von SiO₂-Partikeln, die mittels eines Sol-Gel-Verfahrens herstellbar sind.

3. Suspension nach Anspruch 2, umfassend zumindest 1 mol organische Säure pro
(I) 225 g SiO₂-Partikeln
bzw,
(II) 6 mol der anorganischen Ausgangsmaterialien der Nano-Partikel.

4. Suspension nach einem der vorangehenden Ansprüche, vorzugsweise nach Anspruch 2 oder 3, wobei einzelne oder sämtliche der polymerisierbaren Monomeren, Oligomeren und/oder Prepolymeren der Komponente (a1) mittels Additionsreaktion polymerisierbar sind.

5. Suspension nach einem der vorangehenden Ansprüche, vorzugsweise nach einem der Ansprüche 2 bis 4, wobei
die äußere Phase (a) umfasst oder besteht aus:
(a1) mit Isocyanat zu Polyurethan polymerisierbaren Polyol-Monomeren, -Oligomeren und/oder -Prepolymeren
(a2) einer oder mehreren co-polymerisierbaren oder nicht co-polymerisierbaren organischen Säuren
und
(a3) einem geblockten oder ungeblockten Isocyanat zur Umsetzung mit der Komponente (a1).

6. Suspension nach einem der vorangehenden Ansprüche, vorzugsweise nach einem der Ansprüche 2 bis 5, wobei die äußere Phase ein Dual-Cure-System ist.

7. Suspension nach Anspruch 6, wobei die äußere Phase ein Dual-Cure-System ist, in dem
(i) die Monomeren, Oligomeren und/oder Prepolymeren der Komponente (a1) sowohl radikalisch als auch nicht-radikalisch polymerisierbar sind
oder
(ii) die Monomeren, Oligomeren und/oder Prepolymeren der Komponente (a1) ausschließlich nicht-radikalisch polymerisierbar sind
und die äußere Phase als zusätzliche Komponente
(a4) radikalisch polymerisierbars Monomere, Oligomere und/oder Prepolymere umfasst.

8. Suspension nach Anspruch 6, wobei die äußere Phase als zusätzliche Komponente
(a5) einen oder mehrere Photoinitiatoren zur Initiierung der radikatischen Polymerisation der radikalisch polymerisierbaren Monomere, Oligomere und/oder Prepolymere umfasst.

9. Suspension nach einem der vorangehenden Ansprüche, vorzugsweise nach einem der Ansprüche 2 bis 8. wobei die eine bzw. eine, mehrere oder sämtliche der organischen Säuren der Komponente (a2) co-polymerisierbar und/oder eine Monocarbonsäure mit 2 oder mehr C-Atomen ist bzw. sind.

10. Suspension nach Anspruch 9, wobei die eine bzw. eine, mehrere oder sämtliche der organischen Säuren der Komponente (a2)
(i) mit Isocyanat co-polymerisierbar sind
oder
(ii) radikalisch co-polymerisierbar sind.

11. Suspension nach einem der vorangehenden Ansprüche, vorzugsweise gemäß Alternative (II) der Ansprüche 2 bis 10, umfassend in oder als Komponente (b) Partikel umfassend oder bestehend aus SiO₂. TiO₂, Al₂O₃, ZrO₂, SiC, anderen oxidischen und/oder keramischen Materialien, Diamant oder aber Kombinationen der genannten Materialien.

12. Suspension nach einem der vorangehenden Ansprüche, vorzugsweise nach einem der Ansprüche 2 bis 11, umfassend in oder als Komponente (b) SiO₂-Partikel.

13. Suspension nach Anspruch 12, wobei die SiO₂-Partike) mittels eines Orgarlosilans obernäehenmodifiziert sind

14. Suspension nach einem der vorangehenden Ansprüche, vorzugsweise nach einem der Ansprüche 2 bis 13, umfassend zumindest 0,5 Gew.-%, vorzugsweise 5 Gew.%, vorzugsweise zumindest 20 Gew.-% der dispergierten Phase (b), bezogen auf das Gesamtgewicht der Suspension.

15. Suspension nach einem der vorangehenden Ansprüche, vorzugsweise nach einem der Ansprüche 2 bis 14, wobei die bzw. eine oder sämtliche der co-polymerisierbaren oder nicht co-polymerisierbaren organischen Säuren der Komponente (a2) ausgewählt sind aus der Gruppe bestehend aus:
Acrylsäure, Methacrylsäure, Essigsäure und deren Anhydride.

16. Suspension nach einem der vorangehenden Ansprüche, vorzugsweise nach einem der Ansprüche 2 bis 15, wobei die Suspension ein Lacksystem ist und vorzugsweise ausgewählt ist aus der Gruppe bestehend aus: Klarlacksysteme und pigmentierte Lacksysteme.

17. Verfahren zur Herstellung einer Suspension nach einem der vorangehenden Ansprüche, mit folgenden Schritten:
- Bereitstellen einer Vor-Suspension umfassend
(a) eine äußere Phase
und
(b) eine dispergierte Phase bestehend aus;
oberflächenmodifizierten und/oder nicht oberflächenmodifizierten anorganischen Partikeln, wobei die anorganischen Partikel eine mittlere Teilchengröße von maximal 200 nm, vorzugsweise maximal 100 nm besitzen,
- Mischen der bereitgestellten Vor-Suspension mit
(a2) einer oder mehreren co-polymerisierbaren oder nicht co-polymerisierbaren organischen Säuren oder Säureanhydriden,
wobei die Art und die Menge der co-polymerisierbaren oder nicht co-polymerislerbaren organischen Säure bzw. Säuren so ausgewählt ist, dass die oberfiächenmodifizierten und/oder nicht oberflächenmodifizierten anorganischen Partikel nach Vermischen von 1 Gewichtsteil Hexamethylendiisocyanat-Biuret mit 1 Gewichtsteil der Suspension gegen Zusammenballung zu Partikeln einer mittleren Teilchengröße von zumindest 1000 nm stabilisiert sind.

18. Verfahren nach Anspruch 17, wobei
(I) die anorganischen Partikel SiO₂-Partikel sind, wobei die SiO₂-Partikel mittels eines Sol-Gel-Verfahrens herstellbar sind und eine mittlere Teilchengröße von maximal 100 nm besitzen,
oder
(II) die anorganischen Partikel anorganische Nano-Partikel sind, wobei die Suspension frei ist von SiO₂-Partikeln, die mittels eines Sol-Gel-Verfahrens herstellbar sind.

19. Verfahren nach Anspruch 18, mit folgendem Schritt:
- Halten der Mischung auf einer Temperatur im Bereich von 60 °C bis 110 °C, vorzugsweise 75 °C bis 80 °C.

20. Verfahren nach Anspruch 19, wobei die Temperatur im Bereich von 60 °C bis 110 °C, vorzugsweise 75 °C bis 80 °C, für einen Zeitraum von zumindest 60 min, vorzugsweise zumindest 90 min gehalten wird.

21. Verfahren nach einem der Ansprüche 17 bis 20, vorzugsweise nach einem der Ansprüche 18 bis 20, wobei die äußere Phase (a) umfasst oder besteht aus:
(a1) polymerisierbaren Monomeren, Oligomere und/oder Prepolymeren.

22. Verwendung einer co-polymerisierbaren oder nicht co-polymerisierbaren organischen Säure als Stabilisierungsmittel zur Stabilisierung
(I) oberflächenmodifizierter und/oder nicht oberflächenmodifizierter SiO₂-Partikel gegen ein Zusammenballen in einer Suspension, wobei die SiO₂-Partikel vorzugsweise mittels eines Sol-Gel-Verfahrens herstellbar sind,
oder
(II) obeflächenmodifizierter und/oder nicht oberflächenmodifizierter anorganischer Nano-Partikel gegen ein Zusammenballen in einer Suspension, mit der Maßgabe, dass die anorganischen Nano-Partikel keine SiO₂-Partikel sind, die mittels eines Sol-Gel-Verfahrens herstellbar sind.

23. Teil- oder vollausgehärtete Dispersion, herstellbar durch Polymerisation zumindest der Komponente (a1) bzw. (a4) einer Suspension nach einem der Ansprüche 1 bis 17, vorzugsweise nach einem der Ansprüche 2 bis 17.

## Claims

1. A suspension of inorganic particles, comprising or consisting of:
(a) an external phase comprising or consisting of:
(a1) polyol monomers, polyol oligomers and/or polyol prepolymers which can be polymerised with isocyanate to form polyurethane and
(a2) one or more copolymerisable or non-copolymerisable organic acids and
(b) a dispersed phase consisting of:
surface-modified and/or non-surface-modified inorganic particles, the inorganic particles having an average particle size of at most 200 nm, preferable at most 100 mn,
the type and the amount of the copolymerisable or non-copolymerisable organic acid or acids being selected such that the surface-modified and/or non-surface-modified inorganic particles, after mixing of 1 part by weight hexamethylene diisocyanate biuret (HDI biuret) with 1 part by weight of the suspension, are stabilised against agglomeration to form particles of an average particle size of at least 1000 nm.

2. A suspension according to Claim 1,
(I) the inorganic particles being SiO₂ particle, the SiO₂ particles being able to be produced by means of a sol-gel method and having an average particle size of at most 100 nm,
or
(II) the inorganic particles being inorganic nanoparticles, the suspension being free from SiO₂ particles which can be produced by means of a sol-gel method.

3. A suspension according to Claim 2, comprising at least 1 mol organic acid per
(I) 225 g SiO₂ particles
or
(II) 6 mol of the inorganic starting materials of the nanoparticles.

4. A suspension according to one of the preceding claims, preferably according to Claim 2 or 3, individual or all of the polymerisable monomers, oligomers and/or prepolymers of component (a1) being polymerisable by means of an addition reaction.

5. A suspension according to one of the preceding claims, preferably according to one of Claims 2 to 4,
the external phase (a) comprising or consisting of:
(a1) polyol monomers, polyol oligomers and/of polyol prepolymers which can be polymerised with isocyanate to form polyurethane
(a2) one or more copolymerisable or non-copolymerisable organic acids and
(a3) a blocked or unblocked isocyanate for reaction with component (a1).

6. A suspension according to one of the preceding claims, preferably according to one of Claims 2 to 5, the external phase being a dual-cure system.

7. A suspension according to Claim 6, the external phase being a dual-cure system, in which
(i) the monomers, oligomers and/or prepolymers of component (a1) are both radically polymerisable and non-radically polymerisable or
(ii) the monomers, oligomers and/or prepolymers of component (a1) are exclusively non-radically polymerisable
and the external phase as additional component comprises
(a4) radically polymerisable monomers, oligomers and/or prepolymers.

8. A suspension according to Claim 6, the external phase comprising as additional Component
(a5) one or more photo-initiators for initiating the radical polymerisation of the radically polymerisable monomers, oligomers and/or prepolymers.

9. A suspension according to one of the preceding claims, preferably according to one of Claims 2 to 8, tha one or one, several or all of the organic acids of component (a2) being copolymerisable and/or being a monocarboxylic acid with 2 or more C atoms.

10. A suspension according to Claim 9, the one or one, several or all of the organic acids of component (a2) being
(i) copolymerisable with isocyanate
or
(ii) radically copolymerisable.

11. A suspension according to one of the preceding claims, preferably according to alternative (II) of Claims 2 to 10, comprising in or as component (b) particles comprising or consisting of SiO₂, TiO₂, Al₂O₃, ZrO₂, SiC, other oxidic and/or ceramic materials, diamond or alternatively combinations of the aforesaid materials.

12. A suspension according to one of the preceding claims, preferably according to one of Claims 2 to 11, comprising in or as component (b) SiO₂ particles.

13. A suspension according to Claim 12, the SiO₂ particles being surface-modified by means of an organosilane.

14. A suspension according to one of the preceding claims, preferably according to one of Claims 2 to 13, comprising at least 0.5% by weight, preferably 5% by weight, preferably at least 20% by weight, of the dispersed phase (b), relative to the total weight of the suspension.

15. A suspension according to one of the preceding claims, preferably according to one of Claims 2 to 14, the one or one, several or all of the copolymerisable or non-copolymerisable organic acids of component (a2) being selected from the group consisting of:
acrylic acid, methacrylic acid, acetic acid and their anhydrides.

16. A suspension according to one of the preceding claims, preferably according to one of Claims 2 to 15, the suspension being a paint system and preferably being selected from the group consisting of: clear lacquer systems and pigmented paint systems.

17. A method for the production of a suspension according to one of the preceding claims, with the following steps:
- provision of a prelimilary suspension comprising
(a) an external phase
and
(b) a dispersed phase consisting of:
surface-modified and/or non-surface-modified inorganic particules, the inorganic particles having an average particle size of at most 200 nm, preferably at most 100 nm,
- mixing of the preliminary suspension which is provided with
(a2) one or more copolymerisable or non-copolymerisable organic acids or acid anhydrides,
the type and the amount of the copolymerisable or non-copolymerisable organic acid or acids being selected such that the surface-modified and/or non-surface-modified inorganic particle, after mixing of 1 part by weight hexamethylene diisocyanate biuret with 1 part by weight of the suspension, are stabilised against agglomeration to form particles of an average particle size of at least 1000 nm.

18. A method according to Claim 17,
(I) the inorganic particles being SiO₂ particles, the SiO₂ particles being able to be produced by means of a sol-gel method and having an average particle size of at most 100 nm,
or
(II) the inorganic particles being inorganic nanoparticles, the suspension being free from SiO₂ particles which can be produced by means of a sol-gel method.

19. A method according to Claim 18, with the following step:
- holding of the mixture at a temperature in the range from 60°C to 110°C, preferably 75°C to 80°C.

20. A method according to Claim 19, the temperature in the range from 60°C to 110°C, preferably 75°C to 80°C, being held for a period of at least 60 min., preferably at least 90 min.

21. A method according to one of Claims 17 to 20, preferably according to one of Claims 18 to 20, the external phase (a) comprising or consisting of:
(a1) polymerisable monomers, oligomers and/or prepolymers.

22. Use of a copolymerisable or non-copolymerisable organic acid as stabilising agent for the stabilisation of
(I) surface-modified and/or non-surface-modified SiO₂ particles against agglomeration in a suspension, the SiO₂ particles preferably being able to be produced by means of a sol-gel method,
or
(II) surface-modified and/or non-surface-modifed inorganic nanoparticles against agglomeration in a suspension, with the proviso that the inorganic nanoparticles are not SiO₂ particles which can be produced by means of a sol-gel method.

23. A partially or fully cured dispersion, able to be produced by polymerisation at least of component (a1) or (a4) of a suspension according to one of Claims 1 to 17, preferably according to one of Claims 2 to 17.

## Revendications

1. Suspension de particules inorganiques, comportant ou contenant :
(a) une phase extérieure comportant ou contenant :
(a1) des monomères, oligomères et/ou prépolymères polymérisables en polyuréthane avec de l'isocyanate,
et
(a2) un ou plusieurs acides organiques co-polymérisables ou non co-polymérisables,
et
(b) d'une phase dispersée contenant :
Des particules inorganiques modifiées en surface et/ou non modifiées en surface, les particules inorganiques ayant une taille de particule de 200 nm maximum, de préférence de 100 nm maximum,
le type et la quantité d'acide(s) organique(s) co-polymérisable(s) ou non copolymérisable(s) étant choisis de telle sorte que les particules inorganiques modifiées en surface et/ou non modifiées en surface sont stabilisées après avoir mélangé 1 partie en poids de biuret de 1,6-hexaméthylène-diisocyanate (HID-biuret) à 1 partie en poids de la suspension pour empêcher une concentration en particules d'une taille de particule moyenne d'au moins 1000 nm.

2. Suspension selon la revendication 1, dans laquelle
(I) les particules inorganiques sont des particules de SiO₂, les particules de SiO₂ pouvant être obtenues par un procédé Sol-Gel et ayant une taille de particule de 100 nm maximum,
ou
(II) les particules inorganiques sont des nanoparticules inorganiques, la suspension étant dépourvue de particules de SiO₂ qui peuvent être obtenues par un procédé Sol-Gel.

3. Suspension selon la revendication 2, comportant au moins 1 mole d'acide organique pour
(I) 225 g de particules de SiO₂,
ou
(II) 6 moles des matières inorganiques de départ des nanoparticules.

4. Suspension selon l'une des revendications précédentes, avantageusement selon la revendication 2 ou 3, dans laquelle des monomères, oligomères et/ou prépolymères polymérisables isolés, ou l'ensemble de ceux-ci, des composants (a1) peuvent être polymérisés par réaction d'addition.

5. Suspension selon l'une des revendications précédentes, de préférence selon l'une des revendications 2 à 4, dans laquelle
la phase extérieure (a) comporte ou contient :
(a1) des monomères, oligomères et/ou prépolymères polymérisables en polyuréthane avec de l'isocyanate,
et
(a2) un ou plusieurs acides organiques co-polymérisables ou non co-polymérisables,
et
(a3) un isocyanate bloqué ou non bloqué pour la conversion avec les composants (a1).

6. Suspension selon l'une des revendications précédentes, de préférence selon l'une des revendications 2 à 5, dans laquelle la phase extérieure est un système Dual-Cure.

7. Suspension selon la revendication 6, dans laquelle la phase extérieure est une système Dual-Cure, dans laquelle
(i) les monomères, oligomères et/ou prépolymères des composants (a1) sont polymérisables du point de vue radicalaire ainsi que non radicalaire
ou
(ii) les monomères, oligomères et/ou prépolymères des composants (a1) sont polymérisables d'un point de vue exclusivement non radicalaire,
et la phase extérieure comporte comme composants supplémentaires (a4) des monomères, oligomères et/ou prépolymères sont polymérisables du point de vue radicalaire.

8. Suspension selon la revendication 6, dans laquelle la phase extérieure comporte comme composants supplémentaires
(a5) un ou plusieurs photo-excitants pour exciter la polymérisation radicalaire des monomères, oligomères et/ou prépolymères polymérisables d'un point de vue radicalaire.

9. Suspension selon l'une des revendications précédentes, de préférence selon l'une des revendications 2 à 8, dans laquelle un acide, l'un des acides, plusieurs acides ou tous les acides inorganiques des composants (a2) sont co-polymérisables et/ou sont un monoacide carbonique comportant 2 atomes de carbone ou plus.

10. Suspension selon la revendication 9, dans laquelle un acide, l'un des acides, plusieurs acides ou tous les acides inorganiques des composants (a2)
(i) sont co-polymérisables avec de l'isocyanate ou
(ii) sont co-polymérisables d'un point de vue radicalaire.

11. Suspension selon l'une des revendications précédentes, de préférence selon l'alternative (II) des revendications 2 à 10, ladite suspension comportant dans des composants (b) ou comme composants (b) des particules qui comportent ou contiennent du SiO₂, TiO₂, Al₂O₃, ZrO₂, SiC, d'autres matières oxydantes et/ou céramiques, du diamant ou bien des combinaison desdites matières.

12. Suspension selon l'une des revendications précédentes, de préférence selon l'une des revendications 2 à 11, comportant dans des composants (b) ou comme composants (b) des particules SiO₂.

13. Suspension selon la revendication 12, dans laquelle les particules de SiO₂ sont modifiées en surface au moyen d'un organosilane.

14. Suspension selon l'une des revendications précédentes, de préférence selon l'une des revendications 2 à 13, comportant au moins 0,5% en poids, de préférence 5% en poids, de préférence au moins 20% en poids de la phase dispersée (b), rapportés au poids total de la suspension.

15. Suspension selon l'une des revendications précédentes, de préférence selon l'une des revendications 2 à 14, dans laquelle un acide, les acides ou tous les acides organiques co-polymérisables ou non co-polymérisables des composants (a2) sont choisis dans le groupe constitués :
de l'acide acrylique, de l'acide méthacrylique, de l'acide acétique et leurs anhydres.

16. Suspension selon l'une des revendications précédentes, de préférence l'une des revendications 2 à 15, dans laquelle la suspension est un vernis et de préférence sélectionné dans le groupe contenant : un vernis clair et un vernis pigmenté.

17. Procédé de fabrication d'une suspension selon l'une des revendications précédentes, comportant les étapes suivantes :
- préparation d'une pré-suspension comportant
(a) une phase extérieure,
et
(b) une phase dispersée contenant :
des particules inorganiques modifiées en surface et/ou non modifiées en surface, les particules inorganiques ayant une taille de particule de 200 nm maximum, de préférence de 100 nm maximum,
- mélanger la pré-suspension préparée à (a2) un ou plusieurs acides ou hydrures d'acide inorganiques co-polymérisables ou non co-polymérisables,
le type et la quantité d'acide(s) organique(s) co-polymérisable(s) ou non copolymérisable(s) étant choisis de telle sorte que les particules inorganiques modifiées en surface et/ou non modifiées en surface sont stabilisées après avoir mélangé 1 partie en poids de biuret de 1,6-hexaméthyiène-diisocyanate (HID-biuret) à 1 partie en poids de la suspension pour empêcher une concentration en particules d'une taille de particule moyenne d'au moins 1000 nm.

18. Procédé selon la revendication 17, dans lequel
(1) les particules inorganiques sont des particules de SiO₂, les particules de SiO₂ pouvant être obtenues par un procédé Sol-Gel et ayant une taille de particule de 100 nm maximum,
ou
(II) les particules inorganiques sont des nanoparticules inorganiques, la suspension étant dépourvue de particules de SiO₂ qui peuvent être obtenues par un procédé Sol-Gel.

19. Procédé selon la revendication 18, comportant l'étape suivante :
- maintenir le mélange à une température dans la gamme allant de 60°C à 110°C, de préférence de 75°C à 80°C.

20. Procédé selon la revendication 19, dans lequel la température est maintenue dans la gamme allant de 60°C à 110°C, de préférence de 75°C à 80°C, pendant une durée d'au moins 60 min, de préférence d'au moins 90 min.

21. Procédé selon l'une des revendications 17 à 20, de préférence selon l'une des revendications 18 à 20, dans lequel la phase extérieure (a) comporte ou contient :
(a1) des monomères, oligomères et/ou prépolymères polymérisables.

22. Utilisation d'un acide organique co-polymérisable ou non co-polymérisable comme agent de stabilisation pour stabiliser
(I) des particules de SiO₂ modifiées en surface et/ou non modifiées en surface pour empêcher une concentration dans une suspension, les particules de SiO₂ pouvant être obtenues par un procédé Sol-Gel,
ou
(II) des nanoparticules modifiées en surface et/ou non modifiées en surface pour empêcher une concentration dans une suspension, avec obligation que les nanoparticules inorganiques ne sont pas des particules de SiO₂ qui peuvent être obtenues par un procédé Sol-Gel,

23. Dispersion totalement ou partiellement durcie, pouvant être obtenue par polymérisation d'au moins les composants (a1) ou (a4) d'une suspension selon l'une des revendications 1 à 17, de préférence selon l'une des revendications 2 à 17.
